# EUROPEAN PATENT SPECIFICATION

(11) **EP 3 277 218 B1**
(45) Date of publication and mention of the grant of the patent: **22.04.2020**
(21) Application number: 16718752.5
(22) Date of filing: 31.03.2016
(51) Int. Cl.: B29C 64/124, B33Y 10/00, B33Y 30/00, B33Y 40/00, A61C 13/00, C08K 5/00

(54) **THREE-DIMENSIONAL FABRICATING SYSTEMS RAPIDLY PRODUCING OBJECTS**
DREIDIMENSIONALE ERZEUGUNGSVERFAHREN FÜR DIE SCHNELLE HERSTELLUNG VON OBJEKTEN
SYSTÈMES DE FABRICATION EN TROIS DIMENSIONS POUR LA PRODUCTION RAPIDE D'OBJETS

(30) Priority: 31.03.2015 US 201562140868 P
(43) Date of publication of application: 07.02.2018
(73) Proprietor: Dentsply Sirona Inc., York, PA 17401 (US)
(72) Inventor: SUN, Benjamin, Jiemin, York, PA 17402 (US); LICHKUS, Andrew, M., York, PA 17404 (US)
(74) Representative: Hartz, Nikolai
(86) International application number: PCT/US2016/025401
(87) International publication number: WO 2016/161194

(56) References cited:
- WO-A2-2014/126837
- GB-A- 1 328 139
- US-A- 3 819 574
- US-A- 5 177 142
- US-A1- 2013 292 862

## Description

### TECHNICAL FIELD

The present invention relates generally to rapid prototyping systems, specifically, a rapid releasing system and fast printing method for making any 3D objects, such as medical devices, dental devices, for example, artificial teeth, dentures, splints, veneers, inlays, onlays, orthodontic appliances, aligners, copings, frame patterns, crowns and bridges, models, appliances and the like and/or otherwise devices.

### BACKGROUND

In general, rapid prototyping refers to a conventional manufacturing process used to make parts, wherein the part is built on a layer-by-layer basis using layers of hardening material. Per this technology, the part to be manufactured is considered a series of discrete cross-sectional regions which, when combined together, make-up a three-dimensional structure. The building-up of a part layer-by-layer is very different than conventional machining technologies, where metal or plastic pieces are cut and drilled to a desired shape. In rapid prototyping technology, the parts are produced directly from computer-aided design (CAD) or other digital images. Software is used to slice the digital image into thin cross-sectional layers. Then, the part is constructed by placing layers of plastic or other hardening material on top of each other. There are many different techniques that can be used to combine the layers of structural material. A curing step may be required to fully cure the layers of material.

An exemplarily rapid prototyping process may use continuous light beam irradiation, such as stereolithography (SLA) or Digital Light Processor (DLP), to build-up the any 3D objects or dental devices as three-dimensional objects from novel liquid resins of this invention. Generally, SLA uses laser beam to trace out the shape of each layer and hardens the photosensitive resin in a vat while the DLP system builds three-dimensional objects by using the Digital Light Processor (DLP) projector to project sequential voxel planes into liquid resin, which then caused the liquid resin to cure.

One issue related to bottom up technique, such as employed in B9Creator from B9Creations, LLC, and Form1 from Formlabs, etc., requires the separation of cured solid from the bottom clear window in a vat (e.g., build chamber), which often showed to be difficult and required extra care. Irradiation is needed to stop to separate cured solid from the bottom clear window in a vat before next layer can be built. Such approaches (in bottom-up systems) introduce a mechanical step (e.g., separating the cured solid from a build platform) that may complicate the apparatus, slow the method, and/or potentially distort the end product.

One attempt to solve this mechanical separation issue is disclosed US 9,205,601 (DeSimone et al.), A method of continuous liquid interface printing is known from WO2014/125837.

### SUMMARY OF THE INVENTION

The present invention provides a method as defined by claim 1. Specifically, the present invention is directed to a method for forming a three dimensional object comprising the steps of providing a carrier and an optically transparent member having a release film coating with a building surface, said carrier and said building surface defining a build region therebetween; filling said build region with a polymerizable liquid; and irradiating said build region through said optically transparent member and said release film coating to form a solid polymer from said polymerizable liquid while concurrently advancing said carrier away from said build surface to form said three-dimensional object from said solid polymer.

It is contemplated that the high strength dental composition has one or any combination of the following features: the release film includes 0.5 to 50% inhibitors; the silicone elastomer is a polydimethylsiloxane elastomer; the release film includes: about 1 to about 99.5% by wt a mixture of: the one or more base materials being a polydimethylsiloxane elastomer; and about 1 to 50% of one or more free radical inhibitors; further comprising a curing agent; the one or more inhibitors are present in an amount ranging from about 3 to about 35% by wt the release film composition; the one or more base materials is silicone materials that is present in an amount ranging from 40 to 95% by wt the release film composition; the one or more inhibitors is selected from the group consisting of 2,6-di-tert-butyl-4-methyl phenol, hydroquinone, methyl ether hydroquinone, many hydroquinone derivatives, 2,2,6,6-tetramethyl-1-piperidinyloxy (TEMPO), 2-tert-butyl-4-hydroxyanisole, 3-tert-butyl-4-hydroxyanisole, propyl ester 3,4,5-trihydroxy-benzoic acid, 2-(1,1-dimethylethyl)-1,4-benzenediol, diphenylpicrylhydrazyl, 4-tert-butylcatechol, N-methylaniline, p-methoxydiphenylamine, diphenylamine, N,N'-diphenyl-p-phenylenediamine, p-hydroxydiphenylamine, phenol, octadecyl-3-(3,5-di-tert-butyl-4-hydroxyphenyl) propionate, tetrakis (methylene (3,5-di-tert-butyl) -4-hydroxy-hydrocinnamate) methane, phenothiazines, alkylamidonoisoureas, thiodiethylene bis (3,5,-di-tert-butyl-4-hydroxy-hydrocinnamate, 1,2,-bis (3,5-di-tert-butyl-4-hydroxyhydrocinnamoyl) hydrazine, tris (2-methyl-4-hydroxy-5-tert-butylphenyl) butane, cyclic neopentanetetrayl bis (octadecyl phosphite), 2,6-di-tert-butyl-p-cresol and many derivatives, 2,2'-methylenebls-(6-tert-butyl-p-cresol), 4,4'-thiobis (6-tert-butyl-m-cresol), 2,2'-methylenebis (6-tert-butyl-p-cresol), 2-tert-butyl-4-hydroxyanisole, 3-tert-butyl-4-hydroxyanisole, and vitamin E; the curing agent is present in an amount ranging from about 0.05 to about 20 % by wt, preferably about 0.1 to about 15% by wt, and most preferably about 1 to about 10% by wt; the optically transparent member is non-porous; the release film coating is made from a composition that includes: one or more base materials selected from the group consisting of silicone, polycarbonate, polyethylene, and polypropylene; and one or more free-radical inhibitors; the release film includes 0.5 to 50% inhibitors; the silicone elastomer is a polydimethylsiloxane elastomer; the release film includes: 1 to 99.5% by wt a mixture of: the one or more base materials being a polydimethylsiloxane elastomer; and 1 to 50% of one or more free radical inhibitors; further comprising a curing agent; the one or more inhibitors are present in an amount ranging from 3 to 35% by wt the release film composition; one or more base materials is silicone materials that is present in an amount ranging from 40 to 95% by wt the release film composition; further comprising the steps of: mixing (i) one or more base materials selected from the group consisting of silicone, polycarbonate, polyethylene, and polypropylene; (ii) one or more free-radical inhibitors; and (iii) a curing agent to form a release composition; coating a surface of the optically transparent member with the release composition; and curing the coating to form a release film coating; further comprising the step of continuously maintaining a dead zone of polymerizable liquid in contact with said build surface of said releasing film; further comprising the step of continuously maintaining a gradient of polymerization zone between said dead zone and said solid polymer and in contact with each thereof, said gradient of polymerization zone comprising said polymerizable liquid in partially cured form; wherein the irradiating step concurrently occurs with one or both of the steps of: continuously maintaining a dead zone of polymerizable liquid in contact with said build surface of said releasing film; and continuously maintaining a gradient of polymerization zone between said dead zone and said solid polymer and in contact with each thereof, said gradient of polymerization zone comprising said polymerizable liquid in partially cured form; the thickness of the release film coating is from 1 to 1000 microns or any combination thereof.

### DETAILED DESCRIPTION OF THE INVENTION

The present invention provides novel rapid releasing film and continuing printing systems for fabricating three-dimensional objects including dental devices using the Digital Light Processor (DLP) projectors or other light beam irradiations, such as stereolithography.

In this system, a specially designed and prepared silicone film or controlled releasing film was used in resin bath, where polymerization inhibitors were incorporated into the film. In the case of using DLP method, it builds 3D objects by projecting sequential voxel planes into liquid resin (or heated resin), which then polymerizes it to solid with a thin layer of liquid resin between cured solid and silicone releasing film or controlled releasing film due to the inhibitor used in silicone film or slowly released inhibitors from controlled releasing film. Many different types of inhibitors can be used, such as monomers, oligomers or polymers. They can be either solid or liquid. There is no need to separate the cured solid from silicone film on the clear window of vat and continuous polymerization is possible, which significantly speeds up the fabrication process. This thin silicone releasing film or controlled releasing film will be continuously changed or replaced to maintain the inhibiting effects so as to maintain a thin layer of liquid resin between cured solid and silicone releasing film for easy releasing and rapid polymerization to quickly build up 3D objects. An easy replace film system or design may be used to facilitate the replacement of the film of this invention. The time controlled releasing film will be placed into position prior to use. In addition, the controlled releasing of inhibitors may preferably be controlled by light irradiation. An automated system may also be used to apply continuously the fresh releasing film so as to maintain the efficient releasing properties. Successive layers of polymerized material are quickly and continuously added in this manner until the device is completely fabricated. Then 3D object, for example, a denture, is washed, finished and fully final cured as needed. The fully cured and polished denture is now ready to be used by the patient.

### Printable Polymerizable Materials

A printable polymerizable material is used to make the dental products in accordance with the methods of this invention. By the term, "printable" as used herein, it is meant a material which is flowable (fluid) at a temperature below ambient temperature, at ambient temperature and above ambient temperature.

Flowable material having a flowable temperature in the range of -30°C to 140°C. The following components can be used to prepare the printable polymerizable material in accordance with this invention.

### Systems and Methods

### 3D Printing using DLP system and 3D printing using stereolithography

In general, many 3D printing systems, including these two approaches (DLP printer or Stereolithography printer) can be used for fabricating the three-dimensional object using the easy releasing and fast printing systems of this invention.

Following each of these approaches, the printable polymerizable material is flowable or heated to form a flowable liquid. In contrast to conventional DLP or SLA printer, 3D printer of this invention allows rapidly and continuously build successive layers of the polymerizable material by projecting or irradiating light onto the building plane and cures to form the 3D object, such as a dental device (e.g., a denture) or otherwise object/device and releases the cured material from the presently invented separating film system easily since a thin layer of liquid resin is maintained between cured object and releasing film. Desirably, one or more inhibitors may be incorporated into a thin silicone releasing film or controlled releasing film to provide the inhibiting effects (e.g., to inhibit and/or sustain polymerization) so as to form a thin layer of liquid resin between cured solid and silicone releasing film for easy releasing and rapid polymerization to quickly build up 3D objects. The resulting 3D object, denture or other dental device should exhibit excellent mechanical and physical properties, shade and color properties. In addition, a hydrophilic crosslinked film coated with aqueous salt solution may also be applied on the clear window of vat in a 3D printer, which acted as a releasing film and allowed the easy separation of cured solid from bottom of clear window of vat. Other liquid medium may also be used to form the separating layer between cured solid and the bottom of clear/transparent window of the vat. Desirably, the vat (e.g., optically transparent member) may be non-porous (e.g., non-permeable to gases such as oxygen, the like or otherwise).

It is contemplated that two part self-cure or heat cure silicone materials (e.g., polydimethylsiloxane or the like) may be used as the one or more base materials for the releasing films with the incorporation of inhibitors, such as BHT. Curing of the releasing film may be accomplished by platinum-catalyzed addition of silane (-Si-H) to terminal vinyl groups or vulcanize at room temperature by condensation reactions in the presence of various free radical polymerization inhibitors. Two part self-cure, heat cure addition polymerization materials may also be used in the presence of various free radical polymerization inhibitors. BHT or other free radical polymerization inhibitors may be added and blended into various thermoset materials (such as polyamids, aminos, silicones and the like) or thermoplastic materials (such as polycarbonate, polyethylene, polypropylene, copolymers, and the like) may also be used as the base component for the releasing film.

It is contemplated that the one or more base materials is present in an amount ranging from 10 to 99 %, preferably 40 to 95%, and most preferably 60 to 90% by wt of the release film composition.

Examples of (free radical) inhibitors contemplated include, but are not limited to 2,6-di-tert-butyl-4-methyl phenol (or BHT for butylhydroxytoluene), hydroquinone, methyl ether hydroquinone, many hydroquinone derivatives, 2,2,6,6-tetramethyl-1-piperidinyloxy (TEMPO), 2-tert-butyl-4-hydroxyanisole, 3-tert-butyl-4-hydroxyanisole, propyl ester 3,4,5-trihydroxy-benzoic acid, 2-(1,1-dimethylethyl)-1,4-benzenediol, diphenylpicrylhydrazyl, 4-tert-butylcatechol, N-methylaniline, p-methoxydiphenylamine, diphenylamine, N,N'-diphenyl-p-phenylenediamine, p-hydroxydiphenylamine, phenol, octadecyl-3-(3,5-di-tert-butyl-4-hydroxyphenyl) propionate, tetrakis (methylene (3,5-di-tert-butyl) -4-hydroxy-hydrocinnamate) methane, phenothiazines, alkylamidonoisoureas, thiodiethylene bis (3,5,-di-tert-butyl-4-hydroxy-hydrocinnamate, 1,2,-bis (3,5-di-tert-butyl-4-hydroxyhydrocinnamoyl) hydrazine, tris (2-methyl-4-hydroxy-5-tert-butylphenyl) butane, cyclic neopentanetetrayl bis (octadecyl phosphite), 2,6-di-tert-butyl-p-cresol and many derivatives, 4,4'-thiobis (6-tert-butyl-m-cresol), 2,2'-methylenebis (6-tert-butyl-p-cresol) 2-tert-butyl-4-hydroxyanisole, 3-tert-butyl-4-hydroxyanisole, vitamin E and derivatives, their combinations, the like, and derivatives thereof.

It is appreciated that the one or more inhibitors may be present in an amount ranging from 0.5 to 50%, (e.g., from 1 to 45% preferably 2 to 40%, (e.g., from 3 to about 35% and most preferably 4 to 30% (e.g., from 5 to 20%) by wt of the release film composition.

It has previously been understood that any catalyst, or catalyst precursor capable of generating a catalyst in situ, which will catalyze the hydrosilylation reaction with the carbon-carbon bonds of the rubber can be used. Such catalysts have included transition metals of Group VIII such as palladium, rhodium, platinum and the like, including complexes of these metals. Chloroplatinic acid has been disclosed as a useful catalyst in U.S. Pat. No. 4,803,244 and European Application No. 651.009. which further disclose that the catalyst may be used at concentrations of 5 to 10,000 parts per million by weight and 100 to 200.000 parts per million by weight based on the weight of elastomer, respectively.

Platinum-containing catalysts which are useful in the process of the invention are described, for example, in U.S. Pat. No. 4.578.497; U.S. Pat. No. 3,220,972; and U.S. Patent No. 2,823,218. These catalysts include chloroplatinic acid, chloroplatinic acid hexahydrate. complexes of chloroplatinic acid with sym-divinyltetramethyldisiloxane. dichloro-bis(triphenylphosphine) platinum (II), cis-dichloro-bis(acetonitrile) platinum (II), dicarbonyldichloroplatinum (II), platinum chloride and platinum oxide. Zero valent platinum metal complexes such as Karstedt's catalyst are particularly preferred, as described in U.S. Pat. No. 3.775.452; U.S. Pat. No. 3,814.730; and U.S Pat. No. 4,288,345. Other contemplated curing agent may include, but are not limited to elemental sulfur, silica, a quinone, a peroxy compound, a metal peroxide, a metal oxide, or a combination comprising at least one of the foregoing crosslinkers. Exemplary quinones include p-benzoquinone, tetramethylbenzoquinone, naphthoquinone, and the like. Peroxy compounds useful as crosslinkers include alkyl or aryl diperoxy compounds. Exemplary aryl diperoxy compounds include those based on dicumyl peroxide (DCP) and marketed by Arkema, Inc. under the tradename Dl-CUP® including, DI-CUP® dialkyl peroxide, DI-CUP® 40C dialkyl peroxide (on calcium carbonate support), DI-CUP® 40K dialkyl peroxide, DI-CUP® 40KE dialkyl peroxide; and alkyl diperoxy compounds including 2,5-dimethyl-2,5-di(t-butylperoxy) hexane and marketed by Akzo-Nobel under the tradename TRIGONOX® 101. Exemplary metal peroxides include magnesium peroxide, calcium peroxide, zinc peroxide, or the like, or a combination comprising at least one of the foregoing. Metal oxides useful as crosslinkers include, for example, zinc oxide, magnesium oxide, titanium dioxide, or the like, or a combination thereof. When present, it is appreciated that the curing agent may be present in an amount ranging from 0.05 to 20%, preferably 0.1 to about 15%, and most preferably 1 to 10% by wt of the release film composition.

Also, as described in the following examples, various formulations of the printable polymerizable materials can be prepared for use in a printing device. It is important that the formulations have sufficiently low viscosity so that they can be handled and cured device can be removed easily from the liquid resin vat (bath). At the same time, the formulations must be capable of producing dental products having sufficient mechanical strength and integrity. Several flowable, printable polymerizable materials were prepared with various shades for different applications. The flowable, printable polymerizable materials were successfully, locally cured to form various 3D objects. Several selected examples are shown in the Example Section. The materials of this invention were cured in this manner layer by layer and formed 3D dental objects that can be separated from the rest of liquid resin in the vat of 3D printer. Additionally, wash solvents (e.g., ethyl acetate, alcohols, acetone, THF, heptane, etc. or their combinations) may be used to remove uncured resin from 3D dental objects and final cure or heat treatment may be used to enhance their mechanical and physical properties as well as their performance. Air barrier coating or sealer may be used prior to final cure. Inert atmosphere may be used for final cure dental devices or mass production of dental devices (e.g., denture teeth, denture bases, crowns) in a manufacturing environment.

Alternatively, the releasing film systems of this invention can be used by other means to build 3D objects. This invention can be used in other industries, such as aerospace, animation and entertainment, architecture and art, automotive, consumer goods and packaging, education, electronics, hearing aids, sporting goods, jewelry, medical, manufacturing, etc.

### EXAMPLES

### EXAMPLE 1

### Preparation of Oligomer

A reactor was charged with 1176 grams of trimethyl-1,6-diisocyanatohexane (5.59 mol) and 1064 grams of bisphenol A propoxylate (3.09 mol) under dry nitrogen flow and heated to about 65°C under positive nitrogen pressure. To this reaction mixture, 10 drops of catalyst dibutyltin dilaurate were added. The temperature of the reaction mixture was maintained between 65 °C and 140 °C for about 70 minutes and followed by additional 10 drops of catalyst dibutyltin dilaurate. A viscous paste-like isocyanate end-capped intermediate product was formed and stirred for 100 minutes. To this intermediate product, 662 grams (5.09 mol) of 2-hydroxyethyl methacrylate and 7.0 grams of BHT as an inhibitor were added over a period of 70 minutes while the reaction temperature was maintained between 68°C and 90 °C. After about five hours stirring under 70 °C, the heat was turned off, and oligomer was collected from the reactor as semi-translucent flexible solid and stored in a dry atmosphere.

### EXAMPLE 2

### Preparation of Urethane Monomer (UCDPMAA)

A 500 mL flask was charged with 38.8 grams (0.200 mol) of 1,3-bis(isocyanatomethyl)cyclohexane under dry nitrogen flow and heated to about 60°C under positive nitrogen pressure. To this reaction mixture, 3 drops of catalyst dibutyltin dilaurate were added. A mixture of 22.7 grams of 2-hydroxy-3-phenoxy propyl acrylate, 26.6 grams (0.204 mol) of 2-hydroxyethyl methacrylate, 11.5 grams (0.099 mol) of 2-hydroxyethyl acrylate and 0.10 grams of BHT as an inhibitor were added over a period of 70 minutes while the reaction temperature was maintained between 56°C and 78°C. After about four hours stirring, the heat was turned off, and monomer was collected from the flask as viscous liquid and stored in a dry atmosphere.

### Printable Polymerizable Compositions

Printable polymerizable compositions are used in a 3D building resin bath of 3D printer to fabricate the dental objects. These compositions may contain acrylate or methacrylate monomers or oligomers, polymers, fillers, pigments, stabilizers and light curable initiators, etc. Preferably, these resins will form flowable liquids at ambient or elevated temperatures and cure rapidly at those temperatures required for different resins to form 3D objects layer-wise. This results in shape-stable three-dimensional objects being formed immediately.

### EXAMPLE 3

### Dental Materials

A polymerizable dental material was prepared by stirring at ambient temperature a liquid mixture of 32 grams of oligomer made following the procedure of Example 1; 20 grams of oligomer made following the procedure of Example 2 (UCDPMAA); 40 grams of ethoxylated bisphenol dimethacrylate (SR480, sold by Sartomer, Exton, PA); 6.0 grams of Clearstrength C320 (sold by Arkema); 1.0 gram of 2,4,6- trimethylbenzoyldiphenylphosphine oxide (Lucirin TPO available from BASF); and 1.0 gram of visible light initiating solution (e.g., about 0.05 to about 10, preferably from about 0.1 to about 5% by wt the dental material) containing 5-20% (e.g., about 13.3%) camphorquinone (CQ), 10-35% (e.g., about 23.0%) methacrylic acid (MAA), 0.05-5% (e.g., about 1.3%) butylated hydroxytoluene (BHT), 30-60% (e.g., about 46%) N, N-dimethylaminoethylneopentyl acrylate, and 5-30% (e.g., about 16.3%) γ-methacryloxypropyltrimethoxysilane.

### EXAMPLE 4

### Dental Materials

A polymerizable dental material was prepared by stirring at ambient temperature a liquid mixture of 32 grams of oligomer made following the procedure of Example 1; 20 grams of butyl diglycol methacrylate (Visiomer® BDGMA, sold by Evonik); 40 grams of 2-phenoxyethyl acrylate (SR339, sold by Sartomer, Exton, PA), 6.0 grams of Clearstrength C320 (sold by Arkema); 1.0 gram of 2,4,6- trimethylbenzoyldiphenylphosphine oxide (Lucirin TPO available from BASF); and 1.0 gram of visible light initiating solution (e.g., about 0.05 to about 10, preferably from about 0.1 to about 5% by wt the dental material) containing 5-20% (e.g., about 13.3%) camphorquinone (CQ), 10-35% (e.g., about 23.0%) methacrylic acid (MAA), 0.05-5% (e.g., about 1.3%) butylated hydroxytoluene (BHT), 30-60% (e.g., about 46%) N, N-dimethylaminoethylneopentyl acrylate, and 5-30% (e.g., about 16.3%) γ-methacryloxypropyltrimethoxysilane.

### EXAMPLE 5

### Dental Materials

A polymerizable dental material was prepared by stirring at ambient temperature a liquid mixture of 350 grams of oligomer made following the procedure of Example 1; 100 grams of tris(2-hydroxy ethyl) isocyanurate triacrylate (SR368, sold by Sartomer); 445 grams of methyl methacrylate (MMA, sold by Evonik); 75 grams of rubber impact modifier S2006 (from Mitsubishi Rayon Co.); 20 gram of 2,4,6- trimethylbenzoyldiphenylphosphine oxide (Lucirin TPO available from BASF); and 10 gram of visible light initiating solution (e.g., about 0.05 to about 10, preferably from about 0.1 to about 5% by wt the dental material) containing 5-20% (e.g., about 13.3%) camphorquinone (CQ), 10-35% (e.g., about 23.0%) methacrylic acid (MAA), 0.05-5% (e.g., about 1.3%) butylated hydroxytoluene (BHT), 30-60% (e.g., about 46%) N, N-dimethylaminoethylneopentyl acrylate, and 5-30% (e.g., about 16.3%) γ-methacryloxypropyltrimethoxysilane.

### EXAMPLE 5B

### Dental Materials

A polymerizable dental material was prepared by stirring at ambient temperature a liquid mixture of 350 grams of oligomer made following the procedure of Example 1; 100 grams of tris(2-hydroxy ethyl) isocyanurate triacrylate (SR368, sold by Sartomer); 445 grams of methyl methacrylate (MMA, sold by Evonik); 75 grams of rubber impact modifier D731 (from Kaneka); and 20 gram of 2,4,6- trimethylbenzoyldiphenylphosphine oxide (Lucirin TPO available from BASF).

### Polymerization inhibiting/releasing films

Silicone releasing film incorporating inhibitors can effectively inhibit the polymerization of liquid resin on the surface of this film. A controlled releasing film can also slowly release inhibitors so as to inhibit the polymerization on the interface between film and printed object. Once inhibitors are consumed or reduced to certain level under certain irradiation intensity, polymerization will start. An inert liquid layer between printed object and clear window on the bottom of vat can also facilitate the releasing of printed object in the vat.

### EXAMPLE 6

### Fabrication of Silicone Thin Film

To 6 grams of Sylgard 184 silicone elastomer base (from Dow Corning), 0.8 grams of butylated hydroxytoluene was added and heated in 90°C oven and thoroughly mixed to a clear and homogeneous solution. After degassed in vacuum oven for 10 minutes, a clear and bubble-free solution was obtained. To this cool solution, 0.60 grams Sylgard 184 silicone elastomer curing agent was added and thoroughly mixed with minimized air entrapment. Carefully poured this mixed solution onto the clear window end of the vat (DLP based 3D printer - B9Creator). Using air gun to spread silicone solution to form a thin film and cured in 50C over for 24 hours to form a thin film coating on the clear window side of vat.

### EXAMPLE 7

### Fabrication of Object

Vat was coated with silicone thin film according to Example 6. The material of Example 5 is loaded into vat of 3D printer (B9Creator) and sequential voxel planes are projected into the first liquid resin in a layer-wise manner as controlled by a computer to form 3D object without the use of sweeper. Object was stuck on the building platform but not on vat and easily removed from vat.

### EXAMPLE 7B

### Fabrication of Object

Vat was coated with silicone thin film according to Example 6. The material of Example 5B is loaded into vat of 3D printer (B9Creator) and sequential voxel planes are projected into the first liquid resin in a layer-wise manner as controlled by a computer to form 3D object without the use of sweeper. Object was stuck on the building platform but not on vat and easily removed from vat.

### EXAMPLE 8 (comparable to EXAMPLE 7)

### Fabrication of Object

Standard Vat from manufacturer was used (from B9Creations). The material of Example 5 is loaded into vat of 3D printer (B9Creator) and sequential voxel planes are projected into the first liquid resin in a layer-wise manner as controlled by a computer (use the same printing parameters as Example 7) to form 3D object without the use of sweeper. Object was stuck on both the building platform and vat in 2 minutes and 3D printer job had to abort.

### EXAMPLE 8B (comparable to EXAMPLE 7B)

### Fabrication of Object

Standard Vat from manufacturer was used (from B9Creations). The material of Example 5B is loaded into vat of 3D printer (B9Creator) and sequential voxel planes are projected into the first liquid resin in a layer-wise manner as controlled by a computer (use the same printing parameters as Example 7B) to form 3D object without the use of sweeper. Object was stuck on both the building platform and vat in 2 minutes and 3D printer job had to abort.

### EXAMPLE 9

### Fabrication of Object

Vat was coated with silicone thin film according to Example 6. The material of Example 4 is loaded into vat of 3D printer (B9Creator) and sequential voxel planes are projected into the first liquid resin in a layer-wise manner as controlled by a computer to form 3D object without the use of sweeper. Object was stuck on the building platform and easily removed from vat.

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the invention.

## Claims

1. A method for forming a three dimensional object comprising the steps of providing a carrier and an optically transparent member having a release film coating with a building surface, said carrier and said building surface defining a build region therebetween;
filling said build region with a polymerizable liquid;
irradiating said build region through said optically transparent member and said release film coating to form a solid polymer from said polymerizable liquid while concurrently advancing said carrier away from said build surface to form said three-dimensional object from said solid polymer.

2. The method of claim 1, wherein the optically transparent member is non-porous.

3. The method of claim 1, wherein the release film coating is made from a composition that includes:
one or more base materials selected from the group consisting of silicone, polycarbonate, polyethylene, and polypropylene; and
one or more free-radical inhibitors.

4. The method of claim 1, wherein the release film includes 0.5 to 50% inhibitors.

5. The method of claim 1, wherein the silicone elastomer is a polydimethylsiloxane elastomer.

6. The method of claim 1, wherein the release film includes: 1 to 99.5% by wt. a mixture of:
the one or more base materials being a polydimethylsiloxane elastomer; and 1 to 50% of one or more free radical inhibitors.

7. The method of claim 1, further comprising a curing agent.

8. The method of claim 1, wherein the one or more inhibitors are present in an amount ranging from 3 to 35% by wt. the release film composition.

9. The method of claim 1, wherein the one or more base materials is silicone materials that is present in an amount ranging from 40 to 95% by wt the release film composition.

10. The method of claim 1, further comprising the steps of:
mixing (i) one or more base materials selected from the group consisting of silicone, polycarbonate, polyethylene, and polypropylene; (ii) one or more free-radical inhibitors; and (iii) a curing agent to form a release composition; coating a surface of the optically transparent member with the release composition; and curing the coating to form a release film coating.

11. The method of claim 1, further comprising the step of continuously maintaining a dead zone of polymerizable liquid in contact with said build surface of said releasing film.

12. The method of claim 1, further comprising the step of continuously maintaining a gradient of polymerization zone between said dead zone and said solid polymer and in contact with each thereof, said gradient of polymerization zone comprising said polymerizable liquid in partially cured form.

13. The method of claim 1, wherein the irradiating step concurrently occurs with one or both steps of:
continuously maintaining a dead zone of polymerizable liquid in contact with said build surface of said releasing film; and continuously maintaining a gradient of polymerization zone between said dead zone and said solid polymer and in contact with each thereof, said gradient of polymerization zone comprising said polymerizable liquid in partially cured form.

14. The method of claim 1, wherein the thickness of the release film coating is from 1 to 1000 microns.

## Patentansprüche

1. Verfahren zum Bilden eines dreidimensionalen Objekts, umfassend die Schritte des Bereitstellens eines Trägers und eines optisch transparenten Elements, das eine Trennfolienbeschichtung mit einer Aufbaufläche umfasst, wobei der Träger und die Aufbaufläche einen Aufbaubereich dazwischen definieren;
Füllen des Aufbaubereichs mit einer polymerisierbaren Flüssigkeit; Bestrahlen des Aufbaubereichs durch das optisch transparente Element und die Trennfolienbeschichtung, um aus der polymerisierbaren Flüssigkeit ein festes Polymer zu bilden, während gleichzeitig der Träger von der Aufbaufläche weggeführt wird, um das dreidimensionale Objekt aus dem festen Polymer zu bilden.

2. Verfahren nach Anspruch 1, wobei das optisch transparente Element nicht porös ist.

3. Verfahren nach Anspruch 1, wobei die Trennfolienbeschichtung aus einer Zusammensetzung hergestellt wird, die umfasst:
ein oder mehrere Basismaterialien, die ausgewählt werden aus der Gruppe bestehend aus Silikon, Polycarbonat, Polyethylen und Polypropylen; und einen oder mehrere Radikalinhibitoren.

4. Verfahren nach Anspruch 1, wobei die Trennfolie 0,5 bis 50% Inhibitoren umfasst.

5. Verfahren nach Anspruch 1, wobei das Silikonelastomer ein Polydimethylsiloxanelastomer ist.

6. Verfahren nach Anspruch 1, wobei die Trennfolie umfasst: 1 bis 99,5 Gew.-% einer Mischung aus:
dem einen oder den mehreren Basismaterialien, die ein Polydimethylsiloxanelastomer sind; und 1 bis 50 % von einem oder mehreren Radikalinhibitoren.

7. Verfahren nach Anspruch 1, ferner umfassend ein Härtungsmittel.

8. Verfahren nach Anspruch 1, wobei der eine oder die mehreren Inhibitoren in einer Menge im Bereich von 3 bis 35 Gew.-% der Trennfolienzusammensetzung vorhanden sind.

9. Verfahren nach Anspruch 1, wobei das eine oder die mehreren Basismaterialien Silikonmaterialien sind, die in einer Menge im Bereich von 40 bis 95 Gew.-% der Trennfolienzusammensetzung vorhanden sind.

10. Verfahren nach Anspruch 1, ferner umfassend die Schritte:
Mischen (i) eines oder mehrerer Basismaterialien, die ausgewählt sind aus der Gruppe bestehend aus Silikon, Polycarbonat, Polyethylen und Polypropylen; (ii) eines oder mehrerer Radikalinhibitoren; und (iii) eines Härtungsmittels, um eine Trennzusammensetzung zu bilden;
Beschichten einer Fläche des optisch transparenten Elements mit der Trennzusammensetzung; und Härten der Beschichtung, um eine Trennfolienbeschichtung zu bilden.

11. Verfahren nach Anspruch 1, ferner umfassend den Schritt des kontinuierlichen Aufrechterhaltens einer Totzone aus polymerisierbarer Flüssigkeit in Kontakt mit der Aufbaufläche der Trennfolie.

12. Verfahren nach Anspruch 1, ferner umfassend den Schritt des kontinuierlichen Aufrechterhaltens eines Polymerisationsgradienten zwischen der Totzone und dem festen Polymer und in Kontakt mit jedem davon, wobei der Polymerisationsgradient die polymerisierbare Flüssigkeit in teilweise ausgehärteter Form umfasst.

13. Verfahren nach Anspruch 1, wobei der Bestrahlungsschritt gleichzeitig erfolgt mit einem oder beiden Schritten von: kontinuierlichem Aufrechterhalten einer Totzone aus polymerisierbarer Flüssigkeit in Kontakt mit der Aufbaufläche der Trennfolie; und kontinuierliches Aufrechterhalten eines Polymerisationsgradienten zwischen der Totzone und dem festen Polymer und in Kontakt mit jedem davon, wobei der Polymerisationsgradient die polymerisierbare Flüssigkeit in teilweise ausgehärteter Form umfasst.

14. Verfahren nach Anspruch 1, wobei die Dicke der Trennfolienbeschichtung 1 bis 1000 Mikrometer beträgt.

## Revendications

1. Procédé pour la formation d'un objet tridimensionnel comprenant les étapes de la fourniture d'un support et d'un élément optiquement transparent ayant un revêtement de film de libération avec une surface de construction, ledit support et ladite surface de construction définissant une région de construction entre eux ;
le remplissage de ladite région de construction avec un liquide polymérisable ; l'irradiation de ladite région de construction par ledit élément optiquement transparent et ledit revêtement de film de libération pour former un polymère solide à partir dudit liquide polymérisable tout en éloignant simultanément ledit support de ladite surface de construction pour former ledit objet tridimensionnel dudit polymère solide.

2. Procédé selon la revendication 1, dans lequel l'élément optiquement transparent est non poreux.

3. Procédé selon la revendication 1, dans lequel le revêtement de film de libération est fabriqué à partir d'une composition qui comprend :
un ou plusieurs matériaux de base sélectionnés parmi le groupe constitué de silicone, de polycarbonate, de polyéthylène et de polypropylène ; et d'un ou plusieurs inhibiteurs de radicaux libres.

4. Procédé selon la revendication 1, dans lequel le film de libération comprend des inhibiteurs de 0,5 à 50%.

5. Procédé selon la revendication 1, dans lequel l'élastomère de silicone est un élastomère de polydiméthylsiloxane.

6. Procédé selon la revendication 1, dans lequel le film de libération comprend : 1 à 99,5 % en poids d'un mélange :
du ou des matériaux de base étant un élastomère de polydiméthylsiloxane ; et de 1 à 50% d'un ou plusieurs inhibiteurs de radicaux libres.

7. Procédé selon la revendication 1, comprenant en outre un agent de durcissement.

8. Procédé selon la revendication 1, dans lequel le ou les inhibiteurs sont présents dans un quantité allant de 3 à 35% en poids de la composition du film de libération.

9. Procédé selon la revendication 1, dans lequel le ou les matériaux de base sont des matériaux en silicone qui sont présents dans une quantité allant de 40 à 95% en poids de la composition de film de libération.

10. Procédé selon la revendication 1, comprenant en outre les étapes :
du mélange (i) d'un ou plusieurs matériaux de base choisis parmi le groupe constitué de silicone, polycarbonate, polyéthylène et polypropylène ; (ii) un ou plusieurs inhibiteurs de radicaux libres ; et (iii) un agent de durcissement pour former une composition de libération ; le revêtement d'une surface de l'élément transparent optiquement avec la composition de libération ; et le durcissement du revêtement pour former un revêtement de film de libération.

11. Procédé selon la revendication 1, comprenant en outre l'étape de maintien continuel d'une zone morte de liquide polymérisable en contact avec ladite surface de construction dudit film de libération.

12. Procédé selon la revendication 1, comprenant en outre l'étape de maintien continuel d'un gradient de zone de polymérisation entre ladite zone morte et ledit polymère solide et en contact avec chacun de ces éléments, ledit gradient de zone de polymérisation comprenant ledit liquide polymérisable sous forme partiellement durcie.

13. Procédé selon la revendication 1, dans lequel l'étape irradiante se produit simultanément avec une ou deux étapes de
maintien continuel d'une zone morte de liquide polymérisable en contact avec ladite surface de construction dudit film de libération ; et le maintien continuel d'un gradient de zone de polymérisation entre ladite zone morte et ledit polymère solide et en contact avec chacun de ces éléments, ledit gradient de zone de polymérisation comprenant ledit liquide polymérisable en forme partiellement durcie. Application de Brevet Européen

14. Procédé selon la revendication 1, dans lequel l'épaisseur du revêtement de film de libération est de 1 à 1 000 microns.
